(19) Europäisches Patentamt
European Patent Office
Office européen des brevets

(11) Numéro de publication : **0 290 358 B1**

(12) # FASCICULE DE BREVET EUROPEEN

(45) Date de publication du fascicule du brevet : **02.01.92 Bulletin 92/01**

(51) Int. Cl.$^5$ : **C22C 21/00**

(21) Numéro de dépôt : **88420143.5**

(22) Date de dépôt : **03.05.88**

(54) **Alliages d'aluminium pour échangeur de chaleur brasé.**

(30) Priorité : **05.05.87 FR 8706685**

(43) Date de publication de la demande : **09.11.88 Bulletin 88/45**

(45) Mention de la délivrance du brevet : **02.01.92 Bulletin 92/01**

(84) Etats contractants désignés : **AT BE CH DE ES GB IT LI NL SE**

(56) Documents cités :
**DE-A- 2 911 295**
**FR-A- 2 316 348**
**FR-A- 2 489 845**
**GB-A- 2 159 175**
**PATENT ABSTRACTS OF JAPAN, vol. 8, no. 201 (M-325)[1638], 14 septembre 1984; & JP-A-59 89 999 (FURUKAWA ARUMINIUMU KOGYO K.K.) 24-05-1984**

(56) Documents cités :
**W. HUFNAGEL: "Aluminium Schlüssel", édition 2, mars 1983, page 76, Aluminium-Verlag, Düsseldorf, DE**
**Registration Record of International Alloy Designations and Chemical Composition Limits for Wrought Aluminum and Wrought Aluminum Alloys, May 1987, A.A.**

(73) Titulaire : **PECHINEY RHENALU**
**6, place de l'Iris Tour Manhattan LA DEFENSE 2**
**F-92400 COURBEVOIE (FR)**

(72) Inventeur : **Gimenez, Philippe**
**7 Chemin du Chapitre**
**F-38100 Grenoble (FR)**
Inventeur : **Kucza, Jean-Claude**
**La Gatelière**
**F-38960 St. Etienne de Crossey (FR)**

(74) Mandataire : **Séraphin, Léon et al**
**PECHINEY 28, rue de Bonnel**
**F-69433 Lyon Cedex 03 (FR)**

EP 0 290 358 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un alliage d'Al de type 3000, selon la nomenclature de l'Aluminium Association, présentant une résistance à la corrosion améliorée lors de l'utilisation comme échangeur de chaleur brasé, en particulier pour les véhicules automobiles.

On sait que les échangeurs brasés de ce type sont soumis à une corrosion intérieure due au fluide de refroidissement du moteur et à une corrosion extérieure due à l'atmosphère environnante et éventuellement aux projections de boues ou de produits de déneigement ou de déverglaçage.

La corrosion intérieure peut conduire soit à un colmatage des canaux par les produits de corrosion (corrosion généralisée), soit à une perforation de l'échangeur thermique (corrosion localisée par piqûres). La corrosion extérieure peut également conduire à la perforation de l'échangeur par piqûres.

Ces différentes formes de corrosion sont évaluées par des tests normalisés, comme indiqué ci-après.

Le document JP-A-5589999 décrit un échangeur brasé formé de tôles composites ayant une âme constituée d'un alliage d'Al contenant (en poids %) de 0,2 à 0,8% de Cu, de 0,1 à 0,8% de Mn, un ou plusieurs des éléments suivants : Mg de 0,1 à 0,5%, Si de 0,1 à 0,6% en tant qu'éléments essentiels, Cr de 0,01 à 0,3% et Zr de 0,01 à 0,3%, revêtues sur la face côté eau, donc destinée à résister à la corrosion, d'un alliage d'Al contenant Ca de 0,005 à 0,2% et Fe + Si pour une quantité totale inférieure à 0,5%.

L'alliage selon l'invention, présentant des caractéristiques améliorées de résistance aux corrosions définies ci-dessus, est un alliage de type 3000, par exemple 3003, 3005, 3105, dont les caractéristiques analytiques principales sont une faible teneur en Zr (Zr jusqu'à 0,07%) associée à une teneur en Cr élevée ($0,15 \leq Cr \leq 0,25\%$), ces pourcentages étant en poids. Les teneurs des autres éléments sont habituelles pour ce type d'alliage —voir nomenclature de l'A.A.— ; en particuliers, on a pour le 3003 :

$$1 \leqslant Mn \leqslant 1,50\ \%$$
$$Si \leqslant 0,6\ \%$$
$$Fe \leqslant 0,7\ \%$$
$$Mg \leqslant 0,5\ \%$$
$$Zn \leqslant 0,1\ \%$$
$$0,05 \leqslant Cu \leqslant 0,2\ \%$$
$$\text{autres chacun} \leqslant 0,05\ \%.$$
$$\text{total} \leqslant 0,15\ \%\ - \quad \text{reste Al.}$$

Une teneur en Cr de l'alliage ($\geq 0,25\%$) entraîne la formation à la coulée de composés intermétalliques grossiers qui fragilisent l'alliage à la coulée, lors de la transformation ultérieure et diminuent les propriétés mécaniques à l'état final.

La teneur en Zr est tenue de préférence inférieure ou égale à 0,04%.

Pour obtenir un bon comportement au brasage, il est préférable que l'alliage présente une grosseur de grain avant brasage, inférieure ou égale à 100 μm.

Les avantages de la présente invention en ce qui concerne la résistance à la corrosion par rapport à un alliage 3003 classique sont reportés dans les exemples comparatifs suivants :

### Exemple 1

Un alliage 3003 classique dont la composition chimique est la suivante (% en poids) :

A) Mn = 1,1%— Si = 0,31% — Fe = 0,57%— Cu = 0,09% — Ti ≤ 0,02% — Zn ≤ 0,05%— Zr = 0,01%— Cr = 0,01%— reste Al

et un alliage 3003 selon l'invention, dont la composition est la suivante :

B) Mn = 0,9%— Si 0,30%— Fe 0,53%— Cu 0,09%— Mg ≤ 0,01% — Zr = 0,07— Cr = 0,24%— reste Al

ont été élaborés sous forme de tôles de 1 mm d'épaisseur totale, plaquées à 10% sur une face par l'alliage 4104. Ces tôles ont subi, dans les mêmes conditions, la simulation d'un cycle de brasage sous vide par maintien de 2 min à 600°C environ. Puis elles sont été soumises aux tests de corrosion normalisés suivants (sur la face alliage 3003 pour la corrosion intérieure et sur la face plaquée 4104 pour la corrosion extérieure) :

— mesure du courant de corrosion $i_o$ (intersection de la droite de Tafel cathodique avec la droite correspondant au potentiel de corrosion Eo) dans un milieu conforme à la norme ASTM D 3585-1983 à 70°C ;
— mesure de la profondeur des piqûres internes après essai au ballon suivant la norme ASTM D 1384 au bout de 1 ou 2 mois d'essai ;
— mesure de la profondeur des piqûres après essais en brouillard salin suivant la norme ASTM B 117 pour des durées de 500, 1000 et 1500 h d'essai.
Les résultats obtenus sont les suivants :

| ESSAI | UNITE | COMPOSITION A | COMPOSITION B |
|---|---|---|---|
| Corrosion généralisée interne* | $nA/cm^2$ | 45 | 55 |
| Corrosion externe brouillard salin 1000h** | µm | 475 | 250 |
| Corrosion interne,test ballon, 1 mois** | µm | 424 | 133 |

* Les valeurs sont inférieures à la valeur limite exigée: 200 $nA/cm^2$

** Moyenne des 10 piqûres les plus profondes.

Exemple 2

L'influence de la teneur en Zr est exemplifiée ci-après :
deux échantillons identiques contenant 1,1% Mn et 0,25% Cr et respectivement 0,07 et 0,14% Zr ont été testés dans les mêmes conditions que l'Exemple 1 ci-dessus.
Les examens micrographiques et les résultats d'essais de corrosions sont les suivants

| Zr(%) | Taille de grain (µm) | Corrosion* extérieure 1000h BS(µm) | Corrosion* intérieure 2 mois (µm) |
|---|---|---|---|
| 0,07 | 62 | 250 | 93 |
| 0,14 | 177 | 300 | 380 |

* Profondeur myenne des piqûres.

On note une dégradation importante de la tenue à la corrosion lorsque Zr > 0,07%.

Propriétés mécaniques

L'alliage selon l'invention a des caractéristiques mécaniques de traction analogues mais légèrement améliorées par rapport à l'alliage 3003 de l'AA comme l'indique l'exemple ci-après.

Les compositions sont identiques à celles des échantillons A et B de l'Exemple 1.

| Sens | Caractéristiques mécaniques | Echantillon A | Echantillon B |
|---|---|---|---|
| Travers | $R_M$ MPa<br>R 0,2 MPa<br>A % | 115<br>45<br>26 | 123<br>50<br>26 |
| Long | $R_M$ MPa<br>R 0,2 MPa<br>A % | 120<br>43<br>31 | 130<br>49<br>40 |

## Revendications

1. Alliage d'aluminium de la série 3000, selon la désignation de l'Aluminum Association présentant une tenue à la corrosion améliorée lors de l'utilisation dans des échangeurs de chaleur brasés caractérisé en ce qu'il contient (en poids %) du Zr et du Cr avec
Zr jusqu'à 0,07 et
0,15 ≤ Cr ≤ 0,25
les teneurs des autres éléments d'alliage étant conformes à celles données dans la nomenclature de l'Aluminum Association.

2. Alliage selon la revendication 1, caractérisé en ce que la teneur en Zr est inférieure ou égale à 0,04%.

3. Alliage selon l'une des revendications 1 ou 2, caractérisé par le fait que la taille de grain, avant l'opération de brasage, est inférieure à 100 µm.

## Patentansprüche

1. Aluminiumlegierung der Serie 3000 nach der Bezeichnung der Aluminium Association mit einer verbesserten Korrosionsbeständigkeit bei der Verwendung in hartgelöteten Wärmeaustauschern, **dadurch gekennzeichnet**, daß sie Zr und Cr mit (in Gew.%)
bis zu 0,07 Zr und
0,15 ≤ Cr ≤ 0,25 enthält, wobei die Gebalte der anderen Legierungselemente den in der Alumin um-Association-Liste angegebenen entsprechen.

2. Legierung nach dem Anspruch 1, **dadurch gekennzeichnet,** daß der Gebalt an Zr unter oder gleich 0,04% ist.

3. Legierung nach einem der Ansprüche 1 oder 2, **dadurch gekennzeichnet,** daß die Korngröße vor dem Hartlötvorgang unter 100 µm ist.

## Claims

1. Aluminium alloy of the 3000 series according to the Aluminum Association designation, having improved corrosion resistance when used in soldered heat exchangers, characterised in that it contains (in % by weight) Zr and Cr wherein
Zr is up to 0.07 and
0.15 ≤ Cr ≤ 0.25
the contents of the other alloying elements corresponding to those given in the Aluminum Association nomenclature.

2. Alloy according to claim 1, characterised in that the Zr content is less than or equal to 0.04%.

3. Alloy according to one of claims 1 to 2, characterised in that the grain size, prior to the soldering operation, is less than 100 μm.